# EUROPEAN PATENT SPECIFICATION

(11) **EP 3 441 230 B1**
(45) Date of publication and mention of the grant of the patent: **02.12.2020**
(21) Application number: 17778999.7
(22) Date of filing: 28.03.2017
(51) Int. Cl.: B41J 29/00, B05C 9/14, B05C 13/02, B29C 65/48, B41J 2/01, B41M 5/00, B65B 61/02, B32B 37/12, B32B 37/20, B32B 38/00, B41J 11/00, B29C 65/00, B29C 65/52, B29C 65/18, B41J 15/18

(54) **INKJET PRINTING-LAMINATION INLINE SYSTEM AND METHOD**
INLINE-SYSTEM UND -VERFAHREN FÜR TINTENSTRAHLDRUCKLAMINIERUNG
SYSTÈME ET PROCÉDÉ EN LIGNE DE STRATIFICATION/IMPRESSION À JET D'ENCRE

(30) Priority: 07.04.2016 JP 2016077535
(43) Date of publication of application: 13.02.2019
(73) Proprietor: Think Laboratory Co., Ltd., Kashiwa-shi Chiba 277-8525 (JP)
(72) Inventor: SHIGETA, Tatsuo, Kashiwa-shi Chiba 277-8525 (JP)
(74) Representative: Mincone, Antimo
(86) International application number: PCT/JP2017/012529
(87) International publication number: WO 2017/175620

(56) References cited:
- EP-A1- 2 329 954
- EP-A1- 2 644 391
- JP-A- S58 224 778
- JP-A- 2000 103 088
- JP-A- 2009 051 011
- JP-A- 2012 250 416
- JP-A- 2013 082 885
- US-A1- 2014 349 045
- US-A1- 2015 029 255
- US-A1- 2016 075 148
- US-B1- 8 096 719

## Description

### Technical Field

The present invention relates to an inkjet printing-lamination inline system and method for subjecting a web-shaped base material to inkjet printing with an aqueous ink and subjecting the printed web-shaped base material to lamination.

### Background Art

Hitherto, there has been performed an operation of subjecting web-shaped base material, for example, a plastic film to inkjet printing with an aqueous ink by an inkjet printer (Patent Document 1).

Further, when such web-shaped base material is used in packages for articles and food, the web-shaped base material subjected to lamination is generally used (Patent Document 2).

In the related art, only printing is performed on a printing line for subjecting a web-shaped base material to printing by a printing machine, and only lamination is performed on a lamination line for subjecting the web-shaped base material to lamination. Therefore, at the time of manufacturing a package, it is required to transfer the package from one manufacturing line to another manufacturing line.

In recent years, various limited items, such as area-limited items and time-limited items, have come to be sold in many cases, and it is required to manufacture packages having various kinds of package designs in small quantity. In manufacturing of packages having various kinds of package designs in small quantity, when the packages are manufactured by transferring the packages from one manufacturing line to another manufacturing line and operating each of the manufacturing lines, there is a problem in that the rate of cost, such as manufacturing cost and facility cost, with respect to items increases.

Further, for printing while continuously conveying a printing base material, there may be employed a scan system and a single-pass system. Of those, the single-pass system is more suitable for high-speed printing because the single-pass system does not require scanning. A single-pass system inkjet printer is disclosed, for example, in Patent Document 3. However, when printing is performed at a printing speed of about 15 m/min, there is a problem in that ink flow and color blurring caused by insufficient drying of an ink, color mixing during multicolor printing, and the like occur, which results in a problem in that it is difficult to increase the printing speed.

### Prior Art Documents

### Patent Documents

Patent Document 1: JP 2014-214160 A
Patent Document 2: JP Hei 9-40008 A
Patent Document 3: JP 2010-142966 A EP2329954, US2014/349045 and JP 2012250416 show examples of printing laminating systems.

### Summary of the Invention

### Problems to be solved by the Invention

The present invention has an object to provide a printing-lamination inline system and method being suitable for manufacturing packages having various kinds of package designs in small quantity and being capable of performing inkjet printing and lamination in an inline manner.

### Means for Solving Problems

In order to solve the above-mentioned problem, there is provided a printing-lamination inline system according to claim 1.

Suitably, the lamination is dry lamination. In the case of lamination based on a dry lamination method, an adhesive is diluted to appropriate viscosity with an organic solvent, is applied to a web-shaped base material, for example, a film, and is dried. After drying, the web-shaped base material is press-bonded to another web-shaped base material, to thereby perform lamination. As an adhesive to be used, there are given a polyester-based adhesive, a polyether-based adhesive, and the like.

According to the invention, the inkjet printer is an inkjet printer for an aqueous ink configured to form an image by ejecting an aqueous ink to the first web-shaped base material, wherein the inkjet printer comprises: a conveyance mechanism configured to continuously convey the first web-shaped base material; an inkjet head of a single-pass system, which is configured to eject, by a single-pass system, the aqueous ink to a surface of the first web-shaped base material conveyed by the conveyance mechanism; and a surface pre-heating unit, which is arranged on an upstream side of conveyance from the inkjet head, and is configured to heat at least the surface of the first web-shaped base material, and wherein the inkjet printer is configured to form the image through use of the inkjet head on the first web-shaped base material heated by the surface pre-heating unit.

According to the invention, the surface pre-heating unit of the inkjet printer is configured to heat the surface of the first web-shaped base material through use of hot air blowing means for blowing hot air against the surface of the first web-shaped base material. Besides heating the first web-shaped base material by blowing hot air against the surface thereof, the first web-shaped base material can also be heated by irradiation of a laser having the same wavelength as an absorption wavelength of the first web-shaped base material. It is also conceivable to heat the first web-shaped base material by irradiation of an infrared ray. However, when the first web-shaped base material is a transparent film, an infrared ray passes therethrough without heating the first web-shaped base material. Therefore, when the first web-shaped base material is heated by irradiation of an infrared ray, the first web-shaped base material needs to have black color or needs to be a base material having a wavelength absorbing an infrared ray. A combination of heating by the hot air blowing means, heating by irradiation of a laser, and heating by irradiation of an infrared ray, which are mentioned above, can also be adopted.

For example, it is preferred that hot air at a temperature of from 40°C to 80°C be blown against the surface of the first web-shaped base material by the hot air blowing means.

According to the invention, the hot air blowing means of the inkjet printer comprises: a nozzle group main body having a plurality of slit-shaped hot air blowing nozzles arranged so as to form gaps with one another, the plurality of slit-shaped hot air blowing nozzles each having a slit-shaped hot air outlet port extending in a width direction of the first web-shaped base material; and a suction mechanism configured to suck an atmosphere of the gaps formed in the nozzle group main body.

Suitably, the inkjet printer further comprises a back surface heating unit configured to heat a back surface of the first web-shaped base material.

Suitably, the heating by the back surface heating unit of the inkjet printer is conducted through use of the hot air blowing means or a hot plate. As heating by the back surface heating unit, heating by the hot air blowing means or the hot plate is suitable.

Further, heating means similar to the above-mentioned surface pre-heating unit may be arranged as a surface post-heating unit on a downstream side of conveyance of the first web-shaped base material from the inkjet head.

Suitably, the first web-shaped base material and/or the second web-shaped base material is a transparent film. As the first web-shaped base material and/or the second web-shaped base material of the transparent film, a film made of a transparent synthetic resin, such as polyethylene terephthalate (PET), polyvinyl chloride (PVC), and polypropylene (PP), may be suitably used.

A printing-lamination method of the present invention is defined in claim 5.

### Advantageous Effects of the Invention

According to the present invention, there can be attained a remarkable effect that a printing-lamination inline system and method being suitable for manufacturing packages having various kinds of package designs in small quantity can be provided.

### Brief Description of Drawings

FIG. 1 is a schematic view for illustrating one embodiment of a printing-lamination inline system according to the present invention.
FIG. 2 is a sectional structural view for illustrating one embodiment of an inkjet printer to be used in the printing-lamination inline system of the present invention.
FIG. 3 is a perspective view for illustrating one embodiment of hot air blowing means to be used in the inkjet printer for use in the printing-lamination inline system of the present invention.
FIG. 4 is an enlarged view of a main portion of FIG. 2.
FIG. 5 is an enlarged view for illustrating a main portion of another embodiment of an inkjet printer to be used in the printing-lamination inline system of the present invention.
FIG. 6 is an enlarged view for illustrating a main portion of still another embodiment of an inkjet printer to be used in the printing-lamination inline system of the present invention.

### Modes for Carrying out the Invention

Embodiments of the present invention are described below, but those embodiments are described as examples, and hence it is understood that various modifications may be made thereto without departing from the technical idea of the present invention. In addition, the same members are denoted by the same reference symbols.

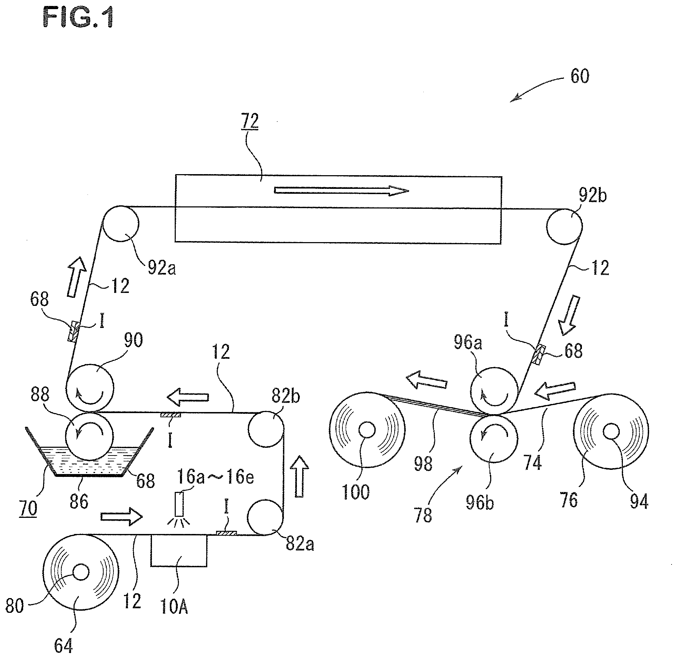

FIG. 1 is a schematic view for illustrating one embodiment of a printing-lamination inline system according to the present invention. According to the system of the present invention, inkjet printing and lamination are performed in an inline manner, that is, are integrated, and thus manufacturing can be performed on the same line.

In FIG. 1, there is illustrated a printing-lamination inline system 60 according to the present invention. The printing-lamination inline system 60 is a printing-lamination inline system comprising a first web-shaped base material supply unit 64, a single-pass system inkjet printer 10A, an adhesive application unit 70, a drying unit 72, a second web-shaped base material supply unit 76, and a lamination unit 78. The first web-shaped base material supply unit 64 is configured to supply a first web-shaped base material 12. The single-pass system inkjet printer 10A is configured to subject the first web-shaped base material 12 to aqueous inkjet printing. The adhesive application unit 70 is configured to apply an adhesive 68 to the first web-shaped base material 12 subjected to the aqueous inkjet printing. The drying unit 72 is configured to dry the applied adhesive 68. The second web-shaped base material supply unit 76 is configured to supply a second web-shaped base material 74 so that the second web-shaped base material 74 is bonded to the first web-shaped base material 12. The lamination unit 78 is configured to subject the first web-shaped base material 12 and the second web-shaped base material 74 to lamination.

The first web-shaped base material supply unit 64 has the first web-shaped base material 12 wound around a winding roll 80, and the first web-shaped base material 12 is unwound to be supplied to the inkjet printer 10A. There are illustrated feed rolls 82a and 82b.

The first web-shaped base material 12 subjected to printing with an aqueous ink I is directly fed to the adhesive application unit 70. The adhesive application unit 70 comprises an adhesive storage tank 86, an application roll 88, and a pressure roller 90, and is configured to apply the adhesive 68 in the adhesive storage tank 86 to a printing surface of the first web-shaped base material 12 passing through between the application roll 88 and the pressure roller 90.

The first web-shaped base material 12 having the adhesive 68 applied thereto is fed to a drying unit 72 and dried by the drying unit 72. As the drying unit 72, for example, a hot air blowing device can be used. The drying unit 72 is adjusted to an appropriate temperature, for example, at 150°C or less (for example, hot air blowing at a temperature of from 80°C to 120°C) with a material for the first web-shaped base material 12, a material for the aqueous ink I, and the like. There are illustrated feed rolls 92a and 92b.

The second web-shaped base material supply unit 76 has the second web-shaped base material 74 wound around a winding roll 94, and the second web-shaped base material 74 is unwound to be supplied to the lamination unit 78 in which press rolls 96a and 96b are arranged. The press roll 96a is a heating metal roll, and the press roll 96b is a rubber roll.

As described above, lamination is performed to manufacture a laminate film 98. The laminate film 98 is wound around and taken up by a winding roll 100. Thus, a printing-lamination method using the printing-lamination inline system of the present invention is performed.

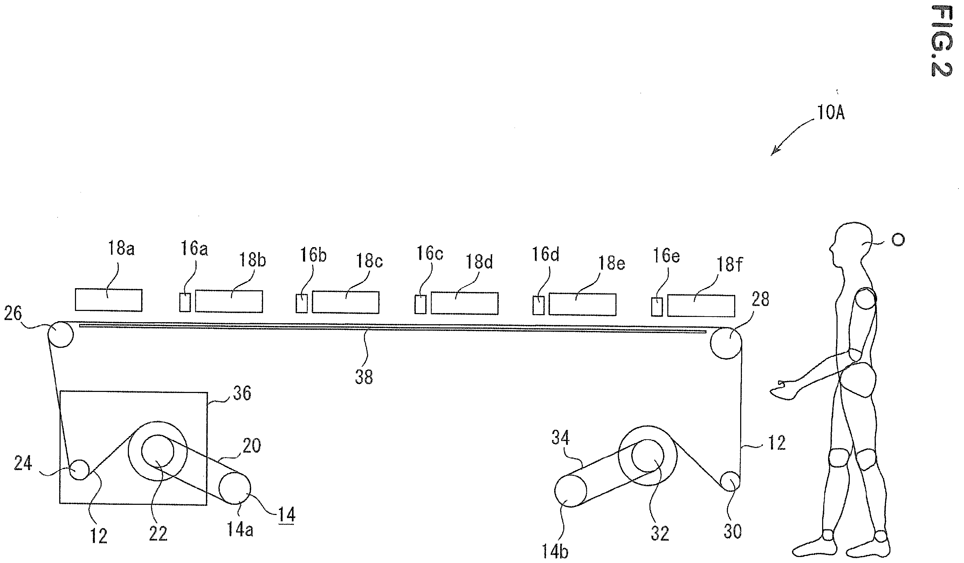

Next, embodiments of an inkjet printer to be used in the printing-lamination inline system of the present invention is described with reference to FIG. 2 to FIG. 6.

FIG. 2 is a sectional structural view for illustrating one embodiment of the inkjet printer to be used in the printing-lamination inline system of the present invention.

In FIG. 2, an inkjet printer 10A is an inkjet printer for an aqueous ink configured to form an image by ejecting an aqueous ink to the first web-shaped base material 12. The inkjet printer 10A comprises a conveyance mechanism 14 (conveyance mechanisms 14a and 14b in the illustrated example), inkjet heads 16a to 16e of a single-pass system, and surface pre-heating units 18a to 18e. The conveyance mechanism 14 is configured to continuously convey the first web-shaped base material 12. The inkjet heads 16a to 16e are configured to eject, by a single-pass system, an aqueous ink to a surface of the first web-shaped base material 12 conveyed by the conveyance mechanism 14. The surface pre-heating units 18a to 18e are arranged on an upstream side of conveyance from the inkjet heads 16a to 16e, and are configured to heat at least the surface of the first web-shaped base material 12. Ink ejection by the inkjet heads 16a to 16e is performed with respect to the first web-shaped base material 12 heated by the surface pre-heating units 18a to 18e. Surface post-heating units 18b to 18f are arranged on a downstream side of conveyance from the inkjet heads 16a to 16e so that drying of the aqueous ink ejected by the inkjet heads 16a to 16e is further accelerated.

The surface pre-heating units 18b to 18e also serve as surface post-heating units and hence also function as the surface post-heating units 18b to 18e.

As the inkjet heads 16a to 16e, various known inkjet ejection devices of the single-pass system can be adopted.

Also as the conveyance mechanism 14, any known mechanism capable of conveying the first web-shaped base material 12 may be adopted. As illustrated in Fig. 2, it is possible to adopt a configuration including drive belts 20 and 34, an original roller 22 having the first web-shaped base material 12 wound therearound, various rollers 24, 26, 28, and 30 configured to convey the first web-shaped base material 12, and a take-up roller 32 configured to take up the printed first web-shaped base material 12. There is illustrated an operator O who operates the inkjet printer.

The original roller 22 having the first web-shaped base material 12 wound therearound is placed in a heating box 36 and is heated in advance (pre-heated) to a temperature of from 60°C to 70°C. The original roller 22 may be heated in the heating box 36 with hot air or various known heaters. In the illustrated example, the inside of the heating box 36 is heated with hot air.

The first web-shaped base material 12 heated in advance as described above has at least the surface thereof heated by the surface pre-heating units 18a to 18e arranged on the upstream side of conveyance from the inkjet heads 16a to 16e. As the surface pre-heating units 18a to 18e, the hot air blowing means is exemplified. In the hot air blowing means, hot air at a temperature of from about 40°C to about 80°C, for example, 70°C is blown against the surface of the first web-shaped base material 12. A time period for blowing hot air is from about 2 seconds to about 3 seconds when a printing speed is 15 m/min, but is appropriately changed also depending on the temperature of the hot air.

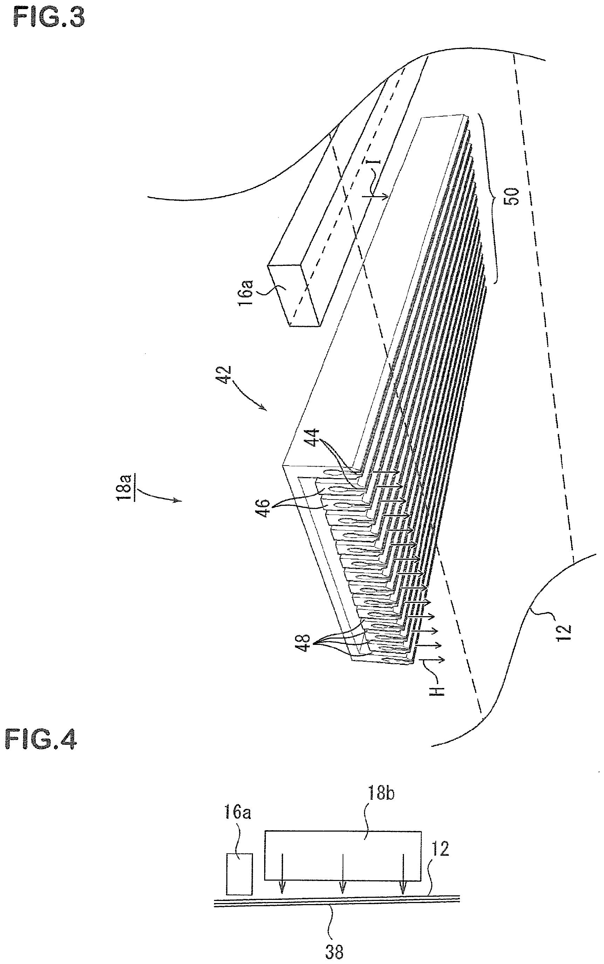

One embodiment of the hot air blowing means to be used as the surface pre-heating units 18a to 18e is illustrated in FIG. 3. As is well illustrated in FIG. 3, as hot air blowing means 42 serving as the surface pre-heating unit 18a, it is possible to adopt a configuration including a nozzle group main body 50 and a suction mechanism (not shown). The nozzle group main body 50 has a plurality of slit-shaped hot air blowing nozzles 46 arranged so as to form gaps 48 with one another. The plurality of slit-shaped hot air blowing nozzles 46 each have a slit-shaped hot air outlet port 44 extending in a width direction of the first web-shaped base material 12. The suction mechanism is configured to suck an atmosphere of the gaps 48 formed in the nozzle group main body 50. The atmosphere of the gaps 48 is sucked in a direction opposite to blowing of hot air H (in a direction opposite to the arrows of FIG. 3) by the suction mechanism (not shown). As such suction mechanism, various known suction devices can be used, and hence illustration thereof is omitted. Thus, the effect of reducing color blurring and the like caused by an aqueous ink is attained by sucking the atmosphere of the gaps 48.

Further, in the example of FIG. 2, as is well illustrated in FIG. 4, there is illustrated an example in which hot air blowing means similar to the hot air blowing means serving as the above-mentioned surface pre-heating unit 18a is used also as the surface post-heating unit 18b and arranged on the downstream side of conveyance from the inkjet head 16a. As is well illustrated in FIG. 2 and FIG. 3, the inkjet heads 16a to 16e are inkjet heads each having an ink storage tank (not shown) of cyan (C), magenta (M), yellow (Y), black (B), or white (W), and the aqueous ink I of each color is ejected from each of the inkjet heads 16a to 16e.

Further, in the example of FIG. 2, there is illustrated an example in which a back surface heating unit 38 configured to heat the first web-shaped base material 12 from a back surface thereof is arranged. As the back surface heating unit 38, a known hot plate can be used. For example, an electrothermal heater having a filament laid on a ceramic plate can be used. When the hot plate is used as the back surface heating unit 38, the hot plate is suitably used after being heated to a temperature of, for example, from 40°C to 65°C. It is only required that the back surface heating unit 38 be arranged so as to correspond to the inkjet heads 16a to 16e. Thus, the back surface heating unit 38 may be arranged across set positions of the inkjet heads 16a to 16e as illustrated in FIG. 2, or can also be arranged in accordance with set positions of the inkjet heads 16a to 16e.

Further, as the back surface heating unit 38, the hot air blowing means similar to the surface pre-heating unit 18a can also be used. Further, when the hot air blowing means is used as the back surface heating unit 38, for example, hot air at a temperature of from 40°C to 80°C is suitably blown against the back surface of the first web-shaped base material 12.

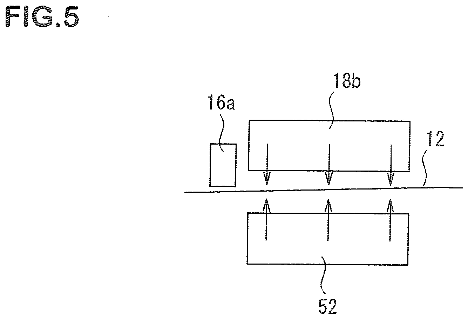

In FIG. 5, there is illustrated an example in which the hot air blowing means is used as the back surface heating unit 38. In FIG. 5, there is illustrated hot air blowing means 52 serving as the back surface heating unit 38. The configuration is the same as the above-mentioned configuration except that the hot air blowing means 52 is arranged as the back surface heating unit 38.

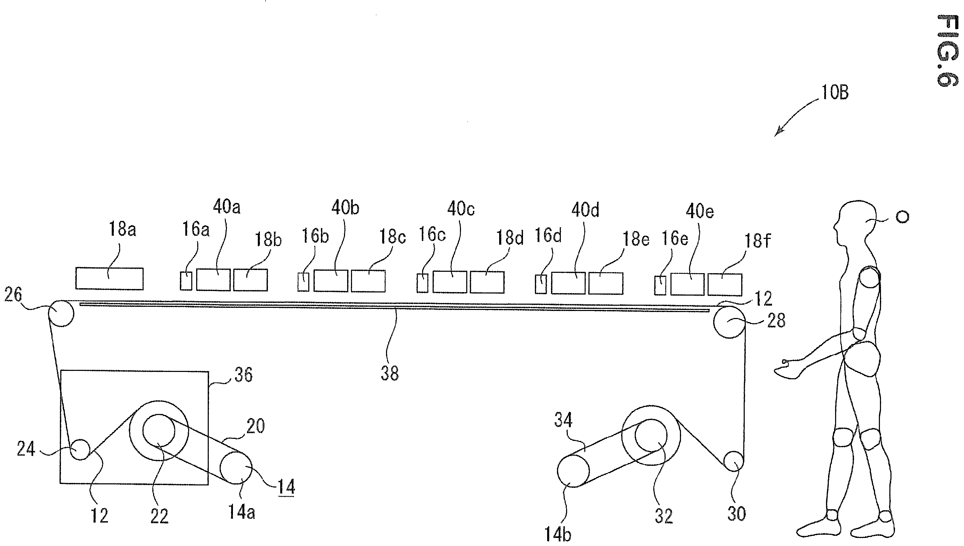

Next, another embodiment of an inkjet printer to be used in the printing-lamination inline system of the present invention is illustrated in FIG. 6.

In FIG. 6, there is illustrated another embodiment of an inkjet printer 10B to be used in the printing-lamination inline system of the present invention. In the inkjet printer 10B, as additional surface post-heating units, laser irradiation devices 40a to 40e are arranged on the downstream side of conveyance from the inkjet heads 16a to 16e. The configuration of the inkjet printer 10B is the same as that of the inkjet printer 10A described above except that the laser irradiation devices 40a to 40e are arranged.

With the inkjet printers 10A and 10B having the configurations as described above, when ink ejection by the inkjet heads 16a to 16e is performed through use of an aqueous ink with respect to the first web-shaped base material 12 heated by the surface pre-heating units 18a to 18e of the inkjet printers 10A and 10B, printing can be suitably performed with respect to a transparent PET film as the first web-shaped base material without ink flow and color blurring, color mixing during multicolor printing, and the like even at a printing speed of 15 m/min. Further, as illustrated in the inkjet printers 10A and 10B, when the surface post-heating units and the back surface heating unit are combined, ink flow and ink blurring, color mixing during multicolor printing, and the like are further eliminated, and printing can be suitably performed.

### Reference Signs List

10A, 10B: inkjet printer, 12: first web-shaped base material, 14, 14a, 14b: conveyance mechanism, 16a to 16e: inkjet head of single-pass system, 18a to 18e: surface pre-heating unit, 18b to 18f: surface post-heating unit, 20, 34: drive belt, 22: original roller, 24, 26, 28, 30: roller, 32: take-up roller, 36: heating box, 38: back surface heating unit, 40a to 40e: laser irradiation device, 42, 52: hot air blowing means, 44: slit-shaped hot air outlet port, 46: slit-shaped hot air blowing nozzle, 48: gap, 50: nozzle group main body, 60: printing-lamination inline system, 64: first web-shaped base material supply unit, 68: adhesive, 70: adhesive application unit, 72: drying unit, 74: second web-shaped base material, 76: second web-shaped base material supply unit, 78: lamination unit, 80, 94, 100: winding roll, 82a, 82b: feed roll, 86: adhesive storage tank, 88: application roll, 90: pressure roller, 92a, 92b: feed roll, 96a, 96b: press roll, 98: laminate film, H: hot air, I: aqueous ink, O: operator

## Claims

1. A printing-lamination inline system (60), comprising:
a first web-shaped base material supply unit (64) configured to supply a first web-shaped base material;
an inkjet printer (10A) of a single-pass system, which is configured to subject the first web-shaped base material to aqueous inkjet printing;
an adhesive application unit (70) configured to apply an adhesive to the first web-shaped base material subjected to the aqueous inkjet printing;
a drying unit (72) configured to dry the applied adhesive;
a second web-shaped base material supply unit (76) configured to supply a second web-shaped base material so that the second web-shaped base material is bonded to the first web-shaped base material; and
a lamination unit (78) configured to subject the first web-shaped base material and the second web-shaped base material to lamination,
wherein the inkjet printer is an inkjet printer for an aqueous ink configured to form an image by ejecting the aqueous ink to the first web-shaped base material,
wherein the inkjet printer comprises:
a conveyance mechanism configured to continuously convey the first web-shaped base material;
a-respective inkjet head (16a-16e) of single-pass system, which is configured to eject, by a single-pass system, the aqueous ink of respective color to a surface of the first web-shaped base material conveyed by the conveyance mechanism; and
a respective surface pre-heating unit (18a-18e), which is arranged on an upstream side of conveyance from the respective inkjet head, and is configured to heat at least the surface of the first web-shaped base material,
wherein the inkjet printer is configured to form the image through use of the inkjet head on the first web-shaped base material heated by the surface pre-heating unit, wherein the surface pre-heating unit of the inkjet printer is configured to heat the surface of the first web-shaped base material through use of hot air blowing means for blowing hot air against the surface of the first web-shaped base material,
a nozzle group main body (50) having a plurality of slit-shaped hot air blowing nozzles (46) arranged so as to form gaps (48) with one another, the plurality of slit-shaped hot air blowing nozzles each having a slit-shaped hot air outlet port extending in a width direction of the first web-shaped base material; and
a suction mechanism configured to suck an atmosphere of the gaps formed in the nozzle group main body,
wherein the first web-shaped base material and/or the second web-shaped base material comprises a transparent synthetic resin film.

2. A printing-lamination inline system according to claim 1, wherein the lamination comprises dry lamination.

3. A printing-lamination inline system according to any one of claims 1 or to 2, wherein the inkjet printer further comprises a back surface heating unit configured to heat a back surface of the first web-shaped base material.

4. A printing-lamination inline system according to claim 3, wherein the back surface heating unit of the inkjet printer is configured to heat the back surface of the first web-shaped base material through use of the hot air blowing means or a hot plate.

5. A printing-lamination method using the printing-lamination inline system of any one of claims 1 to 4,
the method comprising:
subjecting the first web-shaped base material to aqueous inkjet printing by the inkjet printer (10A) ;
applying an adhesive to the first web-shaped base material subjected to the aqueous inkjet printing by the adhesive application unit (70) and drying the applied adhesive by the drying unit (72); and
bonding the first web-shaped base material and the second web-shaped base material to each other and subjecting the first web-shaped base material and the second web-shaped base material to lamination.

## Patentansprüche

1. Inline-System für Drucklaminierung (60), umfassend:
eine erste Versorgungseinheit für bahnförmiges Basismaterial (64), die konfiguriert ist, um ein erstes bahnförmiges Basismaterial zu liefern;
einen Tintenstrahldrucker (10A) eines Single-Pass-Systems, der konfiguriert ist, um das erste bahnförmige Basismaterial einem wässrigen Tintenstrahldruck zu unterziehen;
eine klebende Anwendungseinheit (70), die konfiguriert ist, um einen Klebstoff auf das erste bahnförmige Basismaterial anzuwenden, das dem wässrigen Tintenstrahldruck unterzogen ist;
eine Trockeneinheit (72), die konfiguriert ist, um den angewendeten Klebstoff zu trocken;
eine zweite Versorgungseinheit für bahnförmiges Basismaterial (76), die konfiguriert ist, um ein zweites bahnförmiges Basismaterial zu liefern, so dass das zweite bahnförmige Basismaterial an das erste bahnförmige Basismaterial gebunden ist; und
eine Laminierungseinheit (78), die konfiguriert ist, um das erste bahnförmige Basismaterial und das zweite bahnförmige Basismaterial einer Laminierung zu unterziehen,
wobei der Tintenstrahldrucker ein Tintenstrahldrucker für eine wässrige Tinte ist, die konfiguriert ist, um ein Bild durch Ausstoßen der wässrigen Tinte auf das erste bahnförmige Basismaterial zu erstellen,
wobei der Tintenstrahldrucker umfasst:
einen Fördermechanismus, der konfiguriert ist, um kontinuierlich das erste bahnförmige Basismaterial zu fördern;
einen entsprechenden Tintenstrahlkopf (16a-16e) eines Single-Pass-Systems, der konfiguriert ist, um durch ein Single-Pass-System die wässrige Tinte der entsprechenden Farbe auf eine Fläche des ersten bahnförmigen Basismaterials auszustoßen, das durch den Fördermechanismus gefördert wird; und
eine entsprechende Oberflächen-Vorheizeinheit (18a-18e), die auf einer vorgelagerten Seite des Fördermechanismus vom entsprechenden Tintenstrahlkopf angeordnet und konfiguriert ist, mindestens die Oberfläche des ersten bahnförmigen Basismaterials zu heizen,
wobei der Tintenstrahldrucker konfiguriert ist, um dasBild durch die Verwendung des Tintenstrahlkopfs auf dem ersten bahnförmigen Basismaterial zu erstellen, das durch die Oberflächen-Vorheizeinheit geheizt wurde, wobei die Oberflächen-Vorheizeinheit des Tintenstrahldruckers konfiguriert ist, um die Oberfläche des ersten bahnförmigen Basismaterials durch die Verwendung von Heißluftblasmitteln zu erwärmen, um heiße Luft gegen die Oberfläche des ersten bahnförmigen Basismaterials zu blasen,
einen Düsengruppen-Hauptkörper (50), der eine Vielzahl von schlitzförmigen Heißluft-Blasdüsen (46) aufweist, die derart angeordnet sind, dass sie Lücken (48) miteinander bilden, wobei die Vielzahl von schlitzförmigen Heißluft-Blasdüsen jeweils einen schlitzförmigen Heißluft-Auslassanschluss aufweist, der sich in einer Breitenrichtung des ersten bahnförmigen Basismaterials erstreckt; und
einen Saugmechanismus, der konfiguriert ist, um eine Atmosphäre der Lücken anzusaugen, der im Düsengruppen-Hauptkörper erstellt ist,
wobei das erste bahnförmige Basismaterial und/oder das zweite bahnförmige Basismaterial ein transparentes synthetisches Harz umfasst.

2. Inline-System für Drucklaminierung nach Anspruch 1, wobei die Laminierung eine Trockenlaminierung umfasst.

3. Inline-System für Drucklaminierung nach einem der Ansprüche 1 oder bis 2, wobei der Tintenstrahldrucker weiter eine Heizeinheit der hinteren Oberfläche umfasst, die konfiguriert ist, um eine hintere Oberfläche des ersten bahnförmigen Basismaterials zu heizen.

4. Inline-System für Drucklaminierung nach Anspruch 3, wobei die Heizeinheit für die hintere Oberfläche des Tintenstrahldruckers konfiguriert ist, um die hintere Oberfläche des ersten bahnförmigen Basismaterials durch die Verwendung des Heißluftblasmittels oder einer heißen Platte zu erwärmen.

5. Verfahren für Drucklaminierung unter Verwendung des Inline-Systems für Drucklaminierung nach einem der Ansprüche 1 bis 4,
wobei das Verfahren umfasst:
Unterziehen des ersten bahnförmigen Basismaterials einem wässrigen Tintenstrahldruck durch den Tintenstrahldrucker (10A);
Anwenden eines Klebstoffs auf das erste bahnförmige Basismaterial, das dem wässrigen Tintenstrahldruck unterzogen wurde, durch die klebende Anwendungseinheit (70), und Trocknen des angewendeten Klebstoffs durch die Trockeneinheit (72); und
Binden des ersten bahnförmigen Basismaterials und des zweiten bahnförmigen Basismaterials aneinander und Unterziehen des ersten bahnförmigen Basismaterials und des zweiten bahnförmigen Basismaterials einer Laminierung.

## Revendications

1. Système en ligne d'impression/stratification (60), comprenant :
une unité de fourniture de premier matériau de base en forme de bande (64) configurée pour fournir un premier matériau de base en forme de bande ;
une imprimante à jet d'encre (10A) d'un système à un seul passage, qui est configurée pour soumettre le premier matériau de base en forme de bande à une impression à jet d'encre aqueuse ;
une unité d'application d'adhésif (70) configurée pour appliquer un adhésif sur le premier matériau de base en forme de bande soumis à l'impression à jet d'encre aqueuse ;
une unité de séchage (72) configurée pour sécher l'adhésif appliqué ;
une unité de fourniture de second matériau de base en forme de bande (76) configurée pour fournir un second matériau de base en forme de bande de façon à ce que le second matériau de base en forme de bande soit fixé au premier matériau de base en forme de bande ; et
une unité de stratification (78) configurée pour soumettre le premier matériau de base en forme de bande et le second matériau de base en forme de bande à une stratification,
dans lequel l'imprimante à jet d'encre est une imprimante à jet d'encre pour une encre aqueuse configurée pour former une image en éjectant l'encre aqueuse sur le premier matériau de base en forme de bande,
dans lequel l'imprimante à jet d'encre comprend :
un mécanisme de transport configuré pour transporter de manière continue le premier matériau de base en forme de bande ;
une tête à jet d'encre (16a-16e) respective d'un système à un seul passage, qui est configurée pour éjecter, par un système à un seul passage, l'encre aqueuse d'une couleur respective sur une surface du premier matériau de base en forme de bande transporté par le mécanisme de transport ; et
une unité de préchauffage de surface (18a-18e) respective, qui est agencée sur un côté en amont de transport à partir de la tête à jet d'encre respective, et est configurée pour chauffer au moins la surface du premier matériau de base en forme de bande,
dans lequel l'imprimante à jet d'encre est configurée pour former l'image par l'intermédiaire d'une utilisation de la tête à jet d'encre sur le premier matériau de base en forme de bande chauffé par l'unité de préchauffage de surface, dans lequel l'unité de préchauffage de surface de l'imprimante à jet d'encre est configurée pour chauffer la surface du premier matériau de base en forme de bande par l'intermédiaire d'une utilisation d'un moyen de soufflage d'air chaud permettant de souffler de l'air chaud contre la surface du premier matériau de base en forme de bande,
un corps principal à groupe de buses (50) présentant une pluralité de buses de soufflage d'air chaud en forme de fentes (46) agencées de façon à former des interstices (48) les unes avec les autres, la pluralité de buses de soufflage d'air chaud en forme de fentes présentant chacune un orifice d'évacuation d'air chaud en forme de fente s'étendant dans une direction de largeur du premier matériau de base en forme de bande ; et
un mécanisme d'aspiration configuré pour aspirer une atmosphère des interstices formés dans le corps principal à groupe de buses,
dans lequel le premier matériau de base en forme de bande et/ou le second matériau de base en forme de bande comprennent un film en résine synthétique transparent.

2. Système en ligne d'impression/stratification selon la revendication 1, dans lequel la stratification comprend une stratification sèche.

3. Système en ligne d'impression/stratification selon l'une quelconque des revendications 1 ou à 2, dans lequel l'imprimante à jet d'encre comprend en outre une unité de chauffage de surface arrière configurée pour chauffer une surface arrière du premier matériau de base en forme de bande.

4. Système en ligne d'impression/stratification selon la revendication 3, dans lequel l'unité de chauffage de surface arrière de l'imprimante à jet d'encre est configurée pour chauffer la surface arrière du premier matériau de base en forme de bande par l'intermédiaire d'une utilisation du moyen de soufflage d'air chaud ou d'une plaque chauffante.

5. Procédé d'impression/stratification utilisant le système en ligne d'impression/stratification selon l'une quelconque des revendications 1 à 4,
le procédé comprenant :
le fait de soumettre le premier matériau de base en forme de bande à une impression à jet d'encre aqueuse par l'imprimante à jet d'encre (10A) ;
une application d'un adhésif sur le premier matériau de base en forme de bande soumis à l'impression à jet d'encre aqueuse par l'unité d'application d'adhésif (70) et un séchage de l'adhésif appliqué par l'unité de séchage (72) ; et
une fixation du premier matériau de base en forme de bande et du second matériau de base en forme de bande l'un à l'autre et le fait de soumettre le premier matériau de base en forme de bande et le second matériau de base en forme de bande à une stratification.
